# EUROPÄISCHE PATENTSCHRIFT

(11) **EP 4 111 049 B1**
(45) Veröffentlichungstag und Bekanntmachung des Hinweises auf die Patenterteilung: **05.07.2023**
(21) Anmeldenummer: 20816954.0
(22) Anmeldetag: 30.11.2020
(51) Int. Cl.: F03B 15/18, F03B 15/06, F03B 11/00, F03B 3/18

(54) **WASSERKRAFTANLAGE MIT ENTLASTUNGSVENTIL**
HYDROELECTRIC POWER PLANT COMPRISING A RELIEF VALVE
CENTRALE HYDROÉLECTRIQUE DOTÉE DE VANNE DE SÉCURITÉ

(30) Priorität: 25.02.2020 DE 102020104831
(43) Veröffentlichungstag der Anmeldung: 04.01.2023
(73) Patentinhaber: Voith Patent GmbH, 89522 Heidenheim (DE)
(72) Erfinder: SCHABASSER, Martin, 3123 Pfaffing (AT)
(86) Internationale Anmeldenummer: PCT/EP2020/083845
(87) Internationale Veröffentlichungsnummer: WO 2021/170271

(56) Entgegenhaltungen:
- EP-A1- 0 822 332
- AT-B- 208 791
- US-A- 3 730 638
- US-A- 4 097 183

## Beschreibung

Die Erfindung betrifft eine Wasserkraftanlage mit einem Entlastungsventil. Entlastungsventile (auch als Druckregelventile oder pressure relief valves - PRV bekannt) kommen in Wasserkraftanlagen zum Einsatz um einen Druckstoß in der Druckrohrleitung beim schnellen Schließen eines Schließorgans zu vermeiden. Bei dem Schließorgan handelt es sich meistens um einen Leitapparat.

Die AT 208 791 B offenbart eine solche Wasserkraftanlage mit einem Entlastungsventil. Bei schnellen Schließbewegungen wird das Entlastungsventil so weit geöffnet, dass die Wassermenge, die nicht mehr durch den Leitapparat fließt, über dasselbe ablaufen kann. Nachdem der Schließvorgang des Leitapparats abgeschlossen ist, schließt das Entlastungsventil so langsam, dass durch die Verzögerung der Wassermassen in der Druckrohrleitung auf die neue Beharrungsgeschwindigkeit kein unzulässig hoher Druckstoß auftritt. Dabei erfolgt die Betätigung des Entlastungsventils durch eine ölhydraulische Einrichtung.

Bei Wasserkraftanlagen mit einem elektrisch betätigten Schließorgan könnte im Prinzip das Entlastungsventil auf die bekannte Weise betätigt werden. Allerdings würde dies erfordern, dass allein für die Betätigung des Entlastungsventils eine ölhydraulische Einrichtung vorgesehen werden muss.

Die DE 10 2017 116 968 B3 offenbart eine Wasserkraftanlage mit einem elektrisch betätigten Schließorgan. Die EP 0 822 332 A1 zeigt eine weitere Wasserkraftanlage mit einem elektrisch betätigten Schließorgan.

Die Aufgabe der Erfindung ist es, eine Wasserkraftanlage mit einem Entlastungsventil und einem elektrisch betätigten Schließorgan anzugeben, bei dem die Betätigung des Entlastungsventils ebenfalls elektrisch erfolgt, so dass dazu keine ölhydraulische Einrichtung vorgesehen werden muss.

Die Aufgabe wird erfindungsgemäß durch eine Ausführung gemäß dem unabhängigen Anspruch gelöst. Weitere vorteilhafte Merkmale der erfindungsgemäßen Ausführung finden sich in den Unteransprüchen.

Die erfindungsgemäße Wasserkraftanlage wird im Folgenden anhand von Figuren erläutert. Die Figuren zeigen im Einzelnen:
- Fig.1: Erfindungsgemäße Wasserkraftanlage
- Fig.2: Einrichtung zur Betätigung des Entlastungsventils in einer ersten Ausführungsform
- Fig.3: Einrichtung zur Betätigung des Entlastungsventils in einer zweiten Ausführungsform
- Fig.4: Einrichtung zur Betätigung des Entlastungsventils in einer dritten Ausführungsform

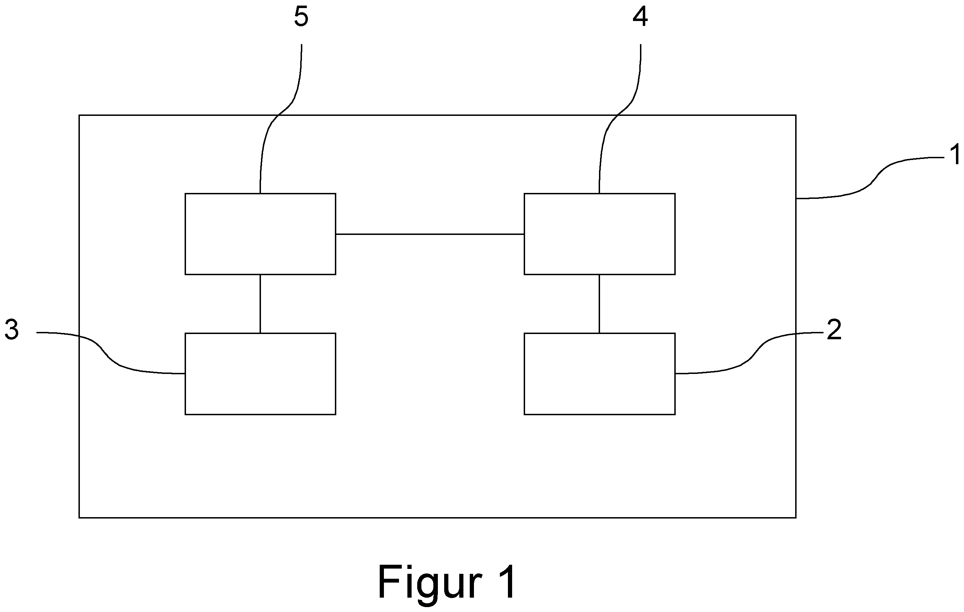

Figur 1 zeigt eine erfindungsgemäße Wasserkraftanlage in stark schematischer Darstellung. Die Wasserkraftanlage ist mit 1 bezeichnet. Die Wasserkraftanlage 1 umfasst ein Schließorgan, welches mit 2 bezeichnet ist, ein Entlastungsventil, welches mit 3 bezeichnet ist, eine Einrichtung zur Betätigung des Schließorgans 2, welche mit 4 bezeichnet ist, und eine Einrichtung zur Betätigung des Entlastungsventils 3, welches mit 5 bezeichnet ist. Die Verbindung zwischen der Einrichtung 4 zur Betätigung des Schließorgans 2 und der Einrichtung 5 zur Betätigung des Entlastungsventils 3 deutet an, dass es eine Kopplung zwischen diesen Elementen geben muss, die die oben beschriebenen Funktonalität sicherstellt.

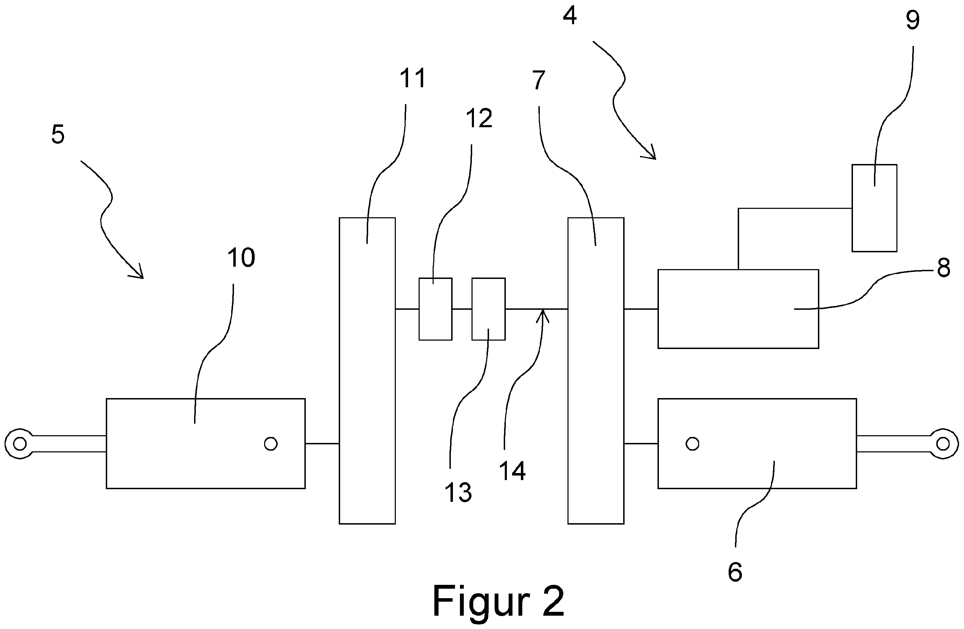

Figur 2 zeigt eine Einrichtung 5 zur Betätigung eines Entlastungsventils in einer ersten Ausführungsform. Figur 2 zeigt außerdem die damit verbundene Einrichtung 4 zur Betätigung eines Schließorgans, da sich die Spezifika der ersten Ausführungsform auf die Art und Weise beziehen, wie diese beiden Einrichtungen miteinander gekoppelt sind. Die Einrichtung 4 zur Betätigung eines Schließorgans umfasst eine Gewindespindel, welche mit 6 bezeichnet ist, ein Getriebe, welches mit 7 bezeichnet ist, einen Elektromotor, welcher mit 8 bezeichnet ist, und einen Frequenzumrichter, welcher mit 9 bezeichnet ist. Die Gewindespindel 6 ist mit dem Schließorgan verbunden und stützt sich außerdem an einem Fundament oder ähnlichem ab (in Figur 2 nicht dargestellt). Die beiden kleinen Kreise deuten dabei die Verbindungsstellen zum Schließorgan und zum Fundament an. Die Gewindespindel 6 ist mit dem Getriebe 7 verbunden. Das Getriebe 7 ist mit dem Elektromotor 8 verbunden. Gewindespindel 6, Getriebe 7 und Elektromotor 8 bilden einen Antriebsstrang. Der Elektromotor 8 ist mit dem Frequenzumrichter 9 verbunden, welcher den Elektromotor 8 antreibt.

Die Einrichtung 5 zur Betätigung eines Entlastungsventils umfasst eine Gewindespindel, welche mit 10 bezeichnet ist, und ein Getriebe, welches mit 11 bezeichnet ist. Die Gewindespindel 10 ist mit dem Entlastungsventil verbunden und stützt sich außerdem analog zur Gewindespindel 6 an einem Fundament ab (in Figur 2 nicht dargestellt). Die Gewindespindel 10 ist mit dem Getriebe 11 verbunden. Die Einrichtung 5 zur Betätigung eines Entlastungsventils umfasst ferner eine Wirbelstromkupplung, welche mit 12 bezeichnet ist, und einen Freilauf, welcher mit 13 bezeichnet ist. Die Wirbelstromkupplung 12 ist mit dem Getriebe 11 verbunden, und der Freilauf 13 ist mit der Wirbelstromkupplung 12 verbunden. Genauso gut kann die Anordnung umgekehrt sein, d.h. dass der Freilauf 13 mit dem Getriebe 11 verbunden, und die Wirbelstromkupplung 12 mit dem Freilauf 13 verbunden ist.

Im allgemeinen Fall umfasst eine erfindungsgemäße Wasserkraftanlage 1 eine Verbindung zwischen der Einrichtung 4 zur Betätigung eines Schließorgans 2 und der Einrichtung 5 zur Betätigung eines Entlastungsventils 3, welche so ausgeführt ist, dass ein Drehmoment auf das Getriebe 11 der Einrichtung 5 über den Freilauf 13 und die Wirbelstromkupplung 12 übertragen werden kann, wenn die Einrichtung 4 eine Schließbewegung ausführt, welche eine vordefinierte Geschwindigkeit überschreitet.

In Figur 2 ist diese Verbindung über eine Verbindungswelle realisiert, welche mit 14 bezeichnet ist und so mit dem Motor 8 der Einrichtung 4 verbunden ist, dass derselbe Motor 8 mittels der Verbindungswelle 14 ein Drehmoment auf das Getriebe 11 der Einrichtung 5 über den Freilauf 13 und die Wirbelstromkupplung 12 übertragen kann, wenn die Einrichtung 4 eine Schließbewegung ausführt, welche eine vordefinierte Geschwindigkeit überschreitet. Dabei ist die Verbindungswelle 14 durch das Getriebe 7 durchgeführt. Genauso gut könnte der Motor 8 mit einer Welle ausgerüstet sein, welche aus beiden Stirnseiten des Motors 8 herausgeführt ist. In diesem Fall wäre der Motor 8 zwischen dem Freilauf 13 bzw. der Wirbelstromkupplung 12 und dem Getriebe 7 angeordnet. Es ist klar, dass die Verbindungswelle 14 auch aus mehreren Teilstücken mit Umlenkungen bestehen kann, so dass auch nichtgeradlinige Verbindungen realisiert werden können.

Im Allgemeinen ist der Freilauf so angeordnet, dass bei einer Bewegung der Einrichtung 4 in Öffnen-Richtung des Schließorgans kein Drehmoment auf das Getriebe 11 übertragen werden kann. Die vordefinierte Geschwindigkeit der Schließbewegung der Einrichtung 4, ab der ein Drehmoment auf das Getriebe 11 übertragen werden kann, wird durch die Auslegung der Wirbelstromkupplung 12 realisiert. Weiter ist klar, dass die Gewindespindel 10 und das Getriebe 11 so ausgebildet sind, dass im Falle ein Drehmoment auf das Getriebe 11 übertragen wird, dies zu einem Öffnen des Entlastungsventils führt. Die Wirbelstromkupplung 12 bewirkt ferner im Falle, dass die Schließbewegung der Einrichtung 4 abgeschlossen ist, dass das Entlastungsventil sich wieder langsam schließen kann. Denn ohne die Wirbelstromkupplung 12 würde sich bei stillstehender Verbindungswelle 14 der Freilauf 13 einem Schließen des Entlastungsventils entgegensetzen, da er in der dafür benötigten Drehrichtung blockiert. In dieser Situation wirkt die Wirbelstromkupplung 12 quasi als Wirbelstrombremse, so dass ein entsprechend gebremstes Schließen des Entlastungsventils auch bei blockierendem Freilauf 13 möglich ist. Es ist klar, dass dafür das Entlastungsventil eine Schließtendenz haben muss, welche beispielsweise über Federkraft oder durch eine entsprechende hydraulische Auslegung realisiert werden kann.

Das System kann optional um Bremsen ergänzt werden, welche zwischen Freilauf 13 und Getriebe 11 angeordnet sind. Solche Bremsen können als Wirbelstrombremsen oder als Fliehkraftbremsen ausgeführt sein und bewirken eine Verlangsamung aller Schließbewegungen, d.h. sowohl einer Schließbewegung des Schließorgans als auch einer Verlangsamung des Schließens des Entlastungsventils. Damit ergeben sich weitere Einstellmöglichkeiten, was die Auslegung des Systems erleichtern kann.

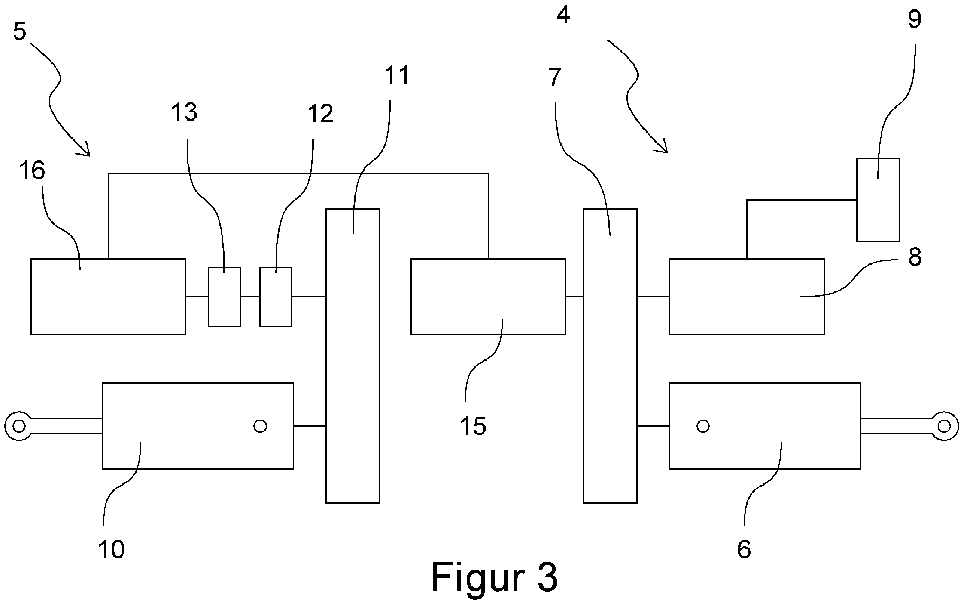

Figur 3 zeigt eine Einrichtung 5 zur Betätigung eines Entlastungsventils in einer zweiten Ausführungsform. Die dargestellten Elemente und die zugehörigen Bezeichnungen entsprechen weitgehend Figur 2. Im Unterschied zu Figur 2 ist nun die Verbindung zwischen der Einrichtung 4 und der Einrichtung 5 nicht über eine mechanische Welle sondern elektrisch realisiert. Dazu umfasst die Einrichtung 4 einen weiteren Elektromotor, der mit 15 bezeichnet und mit dem Elektromotor 8 mechanisch durch eine Verbindung der Wellen verbunden ist. In Figur 3 ist das durch einen Durchführung der jeweiligen Wellen durch das Getriebe 7 realisiert. Durch die Verwendung von Motoren deren Welle aus beiden Stirnseiten heraustritt ergeben sich auch andere Möglichkeiten um die Wellen der Motoren 8 und 15 zu verbinden. Wenn der Motor 8 betrieben wird, dann arbeitet der Motor 15 als Generator. Die Einrichtung 5 umfasst ebenfalls einen weiteren Elektromotor, welcher mit 16 bezeichnet und dessen Welle mit dem Freilauf verbunden ist. Auch in diesem Fall könnte der Freilauf 13 in Bezug auf die Position genauso gut mit der Wirbelstromkupplung 12 vertauscht sein, so dass die Welle des Motors 16 mit der Wirbelstromkupplung 12 verbunden wäre. Allgemein gesprochen ist der Motor 16 also so angeordnet, dass er über die Wirbelstromkupplung 12 und den Freilauf 13 ein Drehmoment auf das Getriebe 11 übertragen kann. Der Elektromotor 15 ist elektrisch mit dem Elektromotor 16 verbunden, so dass unter Vernachlässigung von Verlusten die beiden Motoren 15 und 16 simultane Bewegungen ausführen. Die in Figur 3 dargestellte Verbindung könnte man auch als "elektrische Welle" im Kontrast zur mechanischen Welle von Figur 2 bezeichnet werden.

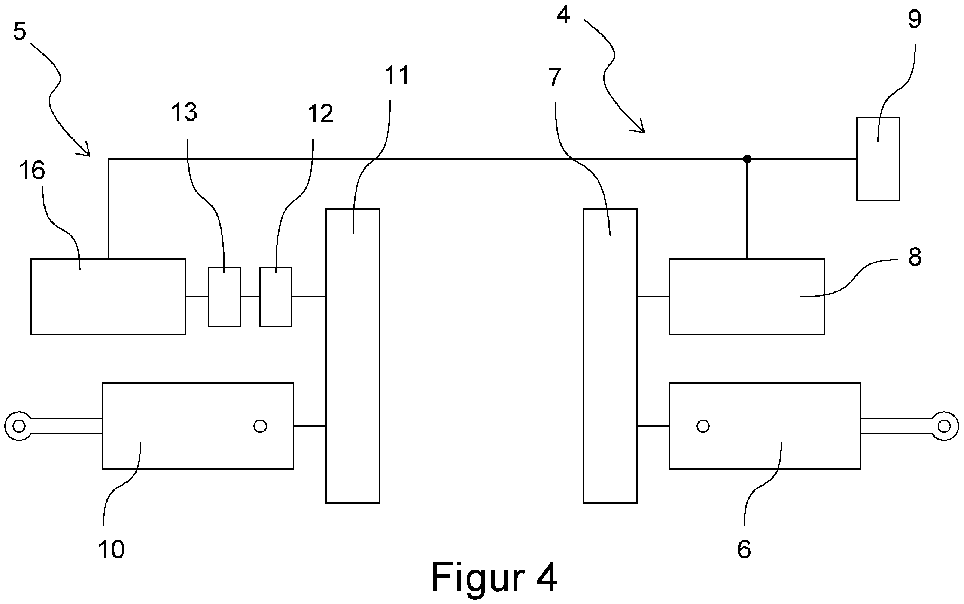

Figur 3 zeigt eine Einrichtung 5 zur Betätigung eines Entlastungsventils in einer dritten Ausführungsform. Die dargestellten Elemente und die zugehörigen Bezeichnungen entsprechen weitgehend Figur 2. Im Unterschied zu Figur 2 ist nun die Verbindung zwischen der Einrichtung 4 und der Einrichtung 5 nicht über eine mechanische Welle sondern dadurch realisiert, dass der Elektromotor 16 der Einrichtung 5 direkt simultan zum Motor 8 der Einrichtung 5 durch den Frequenzumrichter 9 angetrieben wird. Alternativ zur Anordnung von Figur 4 könnte der Elektromotor 16 auch von einem separaten Frequenzumrichter betrieben werden. Die Verbindung würde dann durch das Regelsystem erfolgen, welches die beiden Frequenzumrichter entsprechend ansteuert.

Abschließend ist zu erwähnen, dass alle bekannten Gewindespindelarten zur Anwendung im Sinne der vorliegenden Erfindung kommen können, insbesondere Planetengewindespindeln bzw. Planetenrollengewindetriebe.

### Bezugszeichenliste

- 1: Wasserkraftanlage
- 2: Schließorgan
- 3: Entlastungsventil
- 4: Einrichtung zur Betätigung des Schließorgans
- 5: Einrichtung zur Betätigung des Entlastungsventils
- 6: Gewindespindel
- 7: Getriebe
- 8: Elektromotor
- 9: Frequenzumrichter
- 10: Gewindespindel
- 11: Getriebe
- 12: Wirbelstromkupplung
- 13: Freilauf
- 14: Welle
- 15: Elektromotor
- 16: Elektromotor

## Patentansprüche

1. Wasserkraftanlage (1) umfassend ein Schließorgan (2), ein Entlastungsventil (3), eine Einrichtung (4) zur Betätigung des Schließorgans (2) und eine Einrichtung (5) zur Betätigung des Entlastungsventils (3), wobei die Einrichtung (4) zur Betätigung des Schließorgans (2) eine Gewindespindel (6), ein Getriebe (7), einen Elektromotor (8) und einen Frequenzumrichter (9) umfasst, wobei die Gewindespindel (6) mit dem Schließorgan (2) und mit dem Getriebe (7) verbunden ist, und wobei das Getriebe (7) mit dem Elektromotor (8) verbunden ist, und wobei der Elektromotor (8) mit dem Frequenzumrichter (9) so verbunden ist, dass derselbe den Elektromotor (8) antreiben kann, wobei die Einrichtung (5) zur Betätigung des Entlastungsventils (3) eine Gewindespindel (10), ein Getriebe (11), eine Wirbelstromkupplung (12) und einen Freilauf (13) umfasst, und wobei die Gewindespindel (10) mit dem Entlastungsventil (3) und mit dem Getriebe (11) verbunden ist, und wobei die Einrichtung (5) zur Betätigung des Entlastungsventils (3) so mit der Einrichtung (4) zur Betätigung des Schließorgans (2) verbunden ist, dass ein Drehmoment auf das Getriebe (11) der Einrichtung (5) zur Betätigung des Entlastungsventils (3) über den Freilauf (13) und die Wirbelstromkupplung (12) übertragen werden kann, wenn die Einrichtung (4) zur Betätigung des Schließorgans (2) eine Schließbewegung ausführt, welche eine vordefinierte Geschwindigkeit überschreitet.

2. Wasserkraftanlage (1) nach Anspruch 1, wobei die Wasserkraftanlage (1) eine Verbindungswelle (14) umfasst, welche so mit dem Motor (8) der Einrichtung (4) zur Betätigung des Schließorgans (2) verbunden ist, dass derselbe Motor (8) mittels der Verbindungswelle (14) ein Drehmoment auf das Getriebe (11) der Einrichtung (5) zur Betätigung des Entlastungsventils (3) über den Freilauf (13) und die Wirbelstromkupplung (12) übertragen kann, wenn die Einrichtung (4) zur Betätigung des Schließorgans (2) eine Schließbewegung ausführt, welche eine vordefinierte Geschwindigkeit überschreitet.

3. Wasserkraftanlage (1) nach Anspruch 1, wobei die Einrichtung (4) zur Betätigung des Schließorgans (2) einen weiteren Elektromotor (15) umfasst, dessen Welle mit der Welle des anderen Elektromotors (8) verbunden ist, und wobei die Einrichtung (5) zur Betätigung des Entlastungsventils (3) einen Elektromotor (16) umfasst, welcher elektrisch mit dem weiteren Elektromotor (15) so verbunden und so angeordnet ist, dass er über die Wirbelstromkupplung (12) und den Freilauf (13) ein Drehmoment auf das Getriebe (11) übertragen kann, wenn die Einrichtung (4) zur Betätigung des Schließorgans (2) eine Schließbewegung ausführt, welche eine vordefinierte Geschwindigkeit überschreitet.

4. Wasserkraftanlage (1) nach Anspruch 1, wobei die Einrichtung (5) zur Betätigung des Entlastungsventils (3) einen Elektromotor (16) umfasst, wobei dieser Elektromotor (16) so mit dem Frequenzumrichter (9) verbunden und so angeordnet ist, dass derselbe angetrieben durch den Frequenzumrichter (9) über die Wirbelstromkupplung (12) und den Freilauf (13) ein Drehmoment auf das Getriebe (11) übertragen kann, wenn die Einrichtung (4) zur Betätigung des Schließorgans (2) eine Schließbewegung ausführt, welche eine vordefinierte Geschwindigkeit überschreitet.

5. Wasserkraftanlage (1) nach einem der vorherigen Ansprüche, wobei die Wasserkraftanlage (1) eine Bremse umfasst, welche zwischen dem Freilauf (13) und dem Getriebe (11) angeordnet ist.

6. Wasserkraftanlage (1) nach Anspruch 5, wobei die Bremse als Wirbelstrombremse ausgebildet ist.

7. Wasserkraftanlage (1) nach Anspruch 5, wobei die Bremse als Fliehkraftbremse ausgebildet ist.

## Claims

1. Hydroelectric installation (1) comprising a closing element (2), a pressure relief valve (3), a facility (4) for actuating the closing element (2) and a facility (5) for actuating the pressure relief valve (3), wherein the facility (4) for actuating the closing element (2) comprises a threaded spindle (6), a gear (7), an electric motor (8) and a frequency converter (9), wherein the threaded spindle (6) is connected to the closing element (2) and to the gear (7), and wherein the gear (7) is connected to the electric motor (8), and wherein the electric motor (8) is connected to the frequency converter (9) in such a way that the same can drive the electric motor (8), wherein the facility (5) for actuating the pressure relief valve (3) comprises a threaded spindle (10), a gear (11), an eddy-current coupling (12) and a freewheel (13), and wherein the threaded spindle (10) is connected to the pressure relief valve (3) and to the gear (11), and wherein the facility (5) for actuating the pressure relief valve (3) is connected to the facility (4) for actuating the closing element (2) in such a manner that a torque can be transmitted to the gear (11) of the facility (5) for actuating the pressure relief valve (3) via the freewheel (13) and the eddy-current coupling (12) when the facility (4) for actuating the closing element (2) executes a closing move which exceeds a predefined speed.

2. Hydroelectric installation (1) according to claim 1, wherein the hydroelectric installation (1) comprises a connecting shaft (14) connected to the motor (8) of the facility (4) for actuating the closing element (2), that the same motor (8) can transmit, by means of the connecting shaft (14), a torque to the gear (11) of the facility (5) for actuating the pressure relief valve (3) via the freewheel (13) and the eddy-current coupling (12) when the facility (4) for actuating the closing element (2) performs a closing move exceeding a predefined speed.

3. Hydroelectric installation (1) according to claim 1, wherein the facility (4) for actuating the closing element (2) comprises a further electric motor (15), the shaft of which is connected to the shaft of the other electric motor (8), and wherein the facility (5) for actuating the pressure relief valve (3) comprises an electric motor (16) electrically connected to the other electric motor (15) and arranged to transmit a torque to the gear (11) via the eddy-current coupling (12) and the freewheel (13) when the facility (4) for actuating the closing element (2) performs a closing move exceeding a predefined speed.

4. Hydroelectric installation (1) according to claim 1, wherein the facility (5) for actuating the pressure relief valve (3) comprises an electric motor (16), said electric motor (16) being so connected to the frequency converter (9) and so arranged, driven by the frequency converter (9), via the eddy-current coupling (12) and the freewheel (13), to transmit a torque to the gear (11) when the facility (4) for actuating the closing element (2) executes a closing move which exceeds a predefined speed.

5. Hydroelectric installation (1) according to any one of the previous claims, wherein the hydroelectric installation (1) comprises a brake arranged between the freewheel (13) and the gear (11).

6. Hydroelectric installation (1) according to claim 5, wherein the brake is designed as an eddy-current brake.

7. Hydroelectric installation (1) according to claim 5, wherein the brake is designed as a centrifugal brake.

## Revendications

1. Aménagement hydroélectrique (1) comprenant un organe de fermeture (2), une soupape de décharge (3), une installation (4) pour actionner l'organe de fermeture (2) et une installation (5) pour actionner la soupape de décharge (3), l'installation (4) pour actionner l'organe de fermeture (2) comprenant une tige filetée (6), une boîte de vitesses (7), un moteur électrique (8) et un convertisseur de fréquence (9), la tige filetée (6) étant reliée à l'organe de fermeture (2) et à la transmission (7), et la transmission (7) étant reliée au moteur électrique (8), et le moteur électrique (8) étant relié au convertisseur de fréquence (9) de telle sorte que ce dernier puisse entraîner le moteur électrique (8), l'installation (5) pour l'actionnement de la soupape de décharge (3) comprenant une tige filetée (10), une boîte de vitesses (11), un accouplement à courants libres (12) et une roue libre (13), et dans lequel la tige filetée (10) est reliée à la soupape de décharge (3) et à l'organe de fermeture (2), et dans lequel l'installation (5) pour l'actionnement de la soupape de décharge (3) est ainsi reliée à l'installation (4) pour l'actionnement de l'organe de fermeture (2), de sorte qu'un couple peut être transmis à la boîte de vitesses (11) de l'installation (5) d'actionnement de la soupape de décharge (3) par l'intermédiaire de la roue libre (13) et de l'accouplement à courants de Foucault (12) lorsque l'installation (4) d'actionnement de l'organe de fermeture (2) exécute un mouvement de fermeture qui dépasse une vitesse prédéfinie.

2. Aménagement hydroélectrique (1) selon la revendication 1, dans lequel l'aménagement hydroélectrique (1) comprend un arbre de liaison (14) qui est ainsi relié au moteur (8) du dispositif (4) d'actionnement de l'organe de fermeture (2), que ce même moteur (8) peut transmettre, au moyen de l'arbre de liaison (14), un couple à la boîte de vitesses (11) du dispositif (5) d'actionnement de la soupape de décharge (3), par l'intermédiaire de la roue libre (13) et de l'accouplement à courants de Foucault (12), lorsque le dispositif (4) d'actionnement de l'organe de fermeture (2) effectue un mouvement de fermeture dépassant une vitesse prédéfinie.

3. Aménagement hydroélectrique (1) selon la revendication 1, dans lequel le dispositif (4) pour actionner l'organe de fermeture (2) comprend un autre moteur électrique (15) dont l'arbre est relié à l'arbre de l'autre moteur électrique (8), et dans lequel le dispositif (5) pour actionner la soupape de décharge (3) comprend un moteur électrique (16), lequel est relié électriquement à l'autre moteur électrique (15) et est disposé de manière à pouvoir transmettre un couple de rotation à la boîte de vitesses (11) par l'intermédiaire de l'accouplement à courants de Foucault (12) et de la roue libre (13) lorsque l'installation (4) destinée à actionner l'organe de fermeture (2) exécute un mouvement de fermeture qui dépasse une vitesse prédéfinie.

4. Aménagement hydroélectrique (1) selon la revendication 1, dans lequel le dispositif (5) d'actionnement de la soupape de décharge (3) comprend un moteur électrique (16), ce moteur électrique (16) étant relié au convertisseur de fréquence (9) et disposé de telle sorte, que ce dernier, entraîné par le convertisseur de fréquence (9), peut transmettre un couple à la boîte de vitesses (11) par l'intermédiaire de l'accouplement à courants de Foucault (12) et de la roue libre (13), lorsque l'installation (4) d'actionnement de l'organe de fermeture (2) effectue un mouvement de fermeture dépassant une vitesse prédéfinie.

5. Aménagement hydroélectrique (1) selon l'une quelconque des revendications précédentes, dans lequel l'aménagement hydroélectrique (1) comprend un frein qui est disposé entre la roue libre (13) et la boîte de vitesses (11).

6. Aménagement hydroélectrique (1) selon la revendication 5, dans lequel le frein est conçu comme un frein à courant de Foucault.

7. Aménagement hydroélectrique (1) selon la revendication 5, dans lequel le frein est un frein centrifuge.
